# EUROPÄISCHE PATENTANMELDUNG

(11) **EP 2 082 832 A2**
(43) Veröffentlichungstag der Anmeldung: **29.07.2009**
(21) Anmeldenummer: 08015994.0
(22) Anmeldetag: 11.09.2008
(51) Int. Cl.: B23Q 9/00, B25H 1/00

(54) **Winkelanschlag für eine zwangsgeführte Elektrohandwerkzeugmaschine und Elektrohandwerkzeugmaschine mit einem Winkelanschlag**

(30) Priorität: 25.01.2008 DE 202008001152 U
(71) Anmelder: Metabowerke GmbH, 72622 Nürtingen (DE)
(72) Erfinder: Westermann, Konrad, 49716 Meppen-Bokeloh (DE)
(74) Vertreter: Gesthuysen, von Rohr & Eggert

(57) **Zusammenfassung**

Gegenstand der Erfindung ist ein Winkelanschlag für eine zwangsgeführte Elektrohandwerkzeugmaschine (2) mit einem am Rand (3) eines zu bearbeitenden Werkstückes (4) anlegbaren, eine Längsrichtung definierenden Ausrichtelement (5), insbesondere in Form einer Ausrichtschiene, und mit einer auf das zu bearbeitende Werkstück (4) auflegbaren Führungsschiene (6) zum seitlichen Führen eines Werkzeugs (7) der Elektrohandwerkzeugmaschine (2) beim Bearbeiten des Werkstückes (4). Die Führungsschiene (6) ist mit dem Ausrichtelement (5) winkelverstellbar verbunden und definiert eine im Winkel zur Längsrichtung verlaufende Querrichtung.

## Beschreibung

Die Erfindung betrifft einen Winkelanschlag für eine zwangsgeführte Elektrohandwerkzeugmaschine mit den Merkmalen des Oberbegriffs von Anspruch 1 sowie eine Elektrohandwerkzeugmaschine mit einem Winkelanschlag mit den Merkmalen des Oberbegriffs von Anspruch 11.

Elektrohandwerkzeugmaschinen sind insbesondere Handkreissägen und Stichsägen, ggf. auch Oberfräsen. Nachfolgend wird die Erfindung anhand einer Handkreissäge als Beispiel einer Elektrohandwerkzeugmaschine erläutert. Entsprechende Erläuterungen gelten auch für andere Elektrohandwerkzeugmaschinen, insbesondere für Stichsägen.

Handkreissägen werden im Gegensatz zu Tischkreissägen meist mobil eingesetzt. Beim Sägen wird stets ein gerader Schnitt angestrebt. Dazu verwendet man eine Führungsschiene, die auf das zu bearbeitende Werkstück aufgelegt wird. Damit läßt sich die Elektrohandwerkzeugmaschine entlang der Führungsschiene in Schnittrichtung sauber führen.

Für langgestreckte, dünne Werkstücke, beispielsweise für Verkleidungspaneele im Innenausbau (schmale Nut/Federbretter aus Holz), ist ein Winkelanschlag bekannt (DE-U-90 04 678), der eine am Rand des zu bearbeitenden Werkstückes anlegbare, eine Längsrichtung definierende Ausrichtschiene aufweist. Über ein Schwenklagerelement ist mit der Ausrichtschiene eine Führungsschiene winkelverstellbar und im eingestellten Winkel fixierbar verbunden, die auf das zu bearbeitende Werkstück in Querrichtung aufgelegt wird. Mittels der Ausrichtschiene am Rand des Werkstückes hat der Winkelanschlag eine feste Relativlage zum Werkstück. Durch Winkelverstellung am Schwenklagerelement kann die Führungsschiene entweder im rechten Winkel oder in einem beliebigen spitzen Winkel zum Rand des Werkstückes, also zur Längsrichtung ausgerichtet werden. Diese im Winkel zur Längsrichtung liegende Ausrichtung der Führungsschiene wird im vorliegenden Fall der Einfachheit halber als Querrichtung bezeichnet, auch wenn der eingestellte Winkel ein spitzer bis rechter Winkel ist. Nach Einstellung des gewünschten Winkels kann das Elektrohandwerkzeug einfach seitlich an der Führungsschiene angelegt über das Werkstück geführt werden und den Sägeschnitt präzise ausführen.

Aus anderem Stand der Technik (DE-A-10 2004 017 420) ist es bekannt, eine Elektrohandwerkzeugmaschine so auszugestalten, daß sie mit einer Verschiebeführung an der Führungsschiene in Eingriff bringbar ist. Dann hängen der Winkelanschlag und die Elektrohandwerkzeugmaschine zusammen und die Elektrohandwerkzeugmaschine wird durch Verschieben auf der Verschiebeführung der Führungsschiene zur Ausführung des Sägeschnittes über das Werkstück geführt.

Der bekannte, eingangs erläuterte Winkelanschlag für eine zwangsgeführte Elektrohandwerkzeugmaschine wird manuell, also von Hand am Werkstück fixiert. Bei größeren Werkstücken ist eine zusätzliche Fixiemadel beabstandet zur Ausrichtschiene vorgesehen, die in das Werkstück eingedrückt wird.

Entscheidend für den praktischen Einsatz eines Winkelanschlages der in Rede stehenden Art bzw. einer Elektrohandwerkzeugmaschine mit einem solchen Winkelanschlag ist deren problemlose Anwendbarkeit. Bei einem handfixierten Winkelanschlag des Standes der Technik gibt es da immer wieder Probleme mit der präzisen Ausführung des Sägeschnittes.

Der Lehre liegt das Problem zugrunde, einen Winkelanschlag für eine zwangsgeführte Elektrohandwerkzeugmaschine anzugeben, der besonders einfach und schnell handhabbar ist. In gleicher Weise gilt diese Problemstellung für eine Elektrohandwerkzeugmaschine mit einem solchen Winkelanschlag.

Die zuvor aufgezeigte Problemstellung ist bei einem Winkelanschlag mit den Merkmalen des Oberbegriffs von Anspruch 1 durch die Merkmale des kennzeichnenden Teils von Anspruch 1 gelöst.

Erfindungsgemäß hat das Ausrichtelement mindestens ein auf den Rand des Werkstückes seitlich aufschiebbares Klemmelement. Im Regelfall wird dieses senkrecht zur Längsrichtung und zur Querrichtung am Werkstück klemmend angreifen. Jedenfalls ist dieses Klemmelement an das Werkstück klemmend anstellbar, so daß durch Fixierung des Ausrichtelementes am Rand des Werkstükkes der Winkelanschlag insgesamt am Werkstück fixierbar ist. Statt einer Handfixierung erfolgt also eine komplette mechanische Fixierung.

Vorzugsweise hat das Ausrichtelement mehrere, insbesondere zwei, gleichartige Klemmelemente, die vorzugsweise in Längsrichtung beabstandet angeordnet sind. Damit hat man eine Zweipunktfixierung des Ausrichtelementes und damit des Winkelanschlages am Werkstück.

Für die Ausgestaltung des Klemmelementes bzw. der Klemmelemente gibt es verschiedene Möglichkeiten. Eine zweckmäßige Handhabung ist dabei maßgeblich von der einfachen und schnellen Bedienbarkeit der Klemmelemente abhängig.

In einer Lösungsvariante ist dazu vorgesehen, daß das Klemmelement als mechanisches Schnellspannelement, vorzugsweise mit einem Exzenterklemmhebel, ausgeführt ist. Derartige Schnellspannelemente sind aus dem Werkzeugmaschinenbau umfangreich bekannt. Insbesondere verwendet werden Exzenterklemmhebel oder Schnellspannknebel mit einer großen Gewindesteigung.

Nach bevorzugter Lehre der Erfindung ist jedoch vorgesehen, daß das Klemmelement elektromechanisch ausgeführt ist. Mit einem elektromechanischen Klemmelement bzw. elektromechanischen Klemmelementen läßt sich die gewünschte Klemmung besonders komfortabel und schnell bewerkstelligen. Für ein elektromechanisches Klemmelement gibt es dabei zwei Ansteuerungsmöglichkeiten. Bevorzugt ist eine Ansteuerungsmöglichkeit, bei der die Klemmkraft durch ein eingebautes Federelement erzeugt wird, das zum Ansetzen des Ausrichtelementes, insbesondere der Ausrichtschiene, an den Rand des Werkstückes elektromechanisch gelüftet wird. Dieses Prinzip eines Solenoids erlaubt es, das Klemmelement normalerweise nicht bestromt zu haben.

Entsprechendes gilt für eine andere Variante, bei der das Klemmelement elektrohydraulisch ausgeführt ist. Elektrohydraulisch lassen sich noch höhere Klemmkräfte erzielen. Hier arbeitet man dann mit entsprechenden Ventilsteuerungen, um den Stromverbrauch in Grenzen zu halten.

Besonders zweckmäßig ist es bei elektrisch angetriebenen Klemmelementen, einen Elektroanschluß zur Führungsschiene hin vorzusehen, so daß man dort den Anschluß an eine Stromversorgung der Elektrohandwerkzeugmaschine herstellen kann.

Bevorzugte Ausgestaltungen und Weiterbildungen der Lehre der Erfindung sind Gegenstand weiterer Unteransprüche.

Gegenstand der Erfindung ist auch eine Elektrohandwerkzeugmaschine, die die Merkmale des Anspruchs 11 aufweist. Diese Elektrohandwerkzeugmaschine beinhaltet einen Winkelanschlag gemäß der Erfindung, mit dessen Führungsschiene das Elektrohandwerkzeug verschiebbar verbindbar oder verbunden ist. Man kann so die Einheit ggf. auch insgesamt handhaben. Alternativ ist es möglich, die Einheit aus den beiden Baugruppen Winkelanschlag einerseits und Elektrohandwerkzeugmaschine andererseits erst vor Ort zusammenzusetzen.

Bevorzugte Ausgestaltungen und Weiterbildungen der kompletten Elektrohandwerkzeugmaschine gemäß der Erfindung sind Gegenstand der diesbezüglichen weiteren Unteransprüche.

Besonders bevorzugt handelt es sich bei der Elektrohandwerkzeugmaschine auch hier um eine Kreissäge mit einem Kreissägeblatt als Werkzeug. Als Alternative auch interessant ist eine Stichsäge.

Im folgenden wird die Erfindung nun anhand einer lediglich Ausführungsbeispiele darstellenden Zeichnung näher erläutert. In der Zeichnung zeigt
- Fig. 1: ein erstes Ausführungsbeispiel einer erfindungsgemäßen Elektrohandwerkzeugmaschine mit Winkelanschlag angesetzt an einem schmalen, plattenartigen Paneel als zu bearbeitendem Werkstück,
- Fig. 2: das Elektrohandwerkzeug gemäß Fig. 1 nach Ausführung des Sägeschnittes im Werkstück,
- Fig. 3: das Elektrohandwerkzeug aus Fig. 2 von der anderen Seite aus gesehen,
- Fig. 4: das Elektrohandwerkzeug aus Fig. 1 ohne Werkstück in einer Ansicht in Längsrichtung gesehen,
- Fig. 5: in einer Fig. 1 entsprechenden Darstellung ein zweites Ausführungsbeispiel einer erfindungsgemäßen Elektrohandwerkzeugmaschine und
- Fig. 6: in einer Fig. 1 entsprechenden Darstellung ein drittes Ausführungsbeispiel einer erfindungsgcmäßen Elektrohandwerkzeugmaschine.

Die Erfindung betrifft einen Winkelanschlag 1 für eine Elektrohandwerkzeugmaschine 2. Im dargestellten Ausführungsbeispiel handelt es sich bei der Elektrohandwerkzeugmaschine 2 um eine Handkreissäge. Bekannt als Elektrohandwerkzeugmaschinen in diesem Zusammenhang sind auch Stichsägen, ggf. auch Oberfräsen.

Der Winkelanschlag 1 weist ein am Rand 3 eines zu bearbeitenden Werkstückes 4 anlegbares, eine Längsrichtung definierendes Ausrichtelement 5 auf. Dieses ist hier und nach bevorzugter Ausführung in Form einer Ausrichtschiene ausgebildet. Es kann sich aber auch um eine lediglich mehrere Anlagepunkte aufweisende Konstruktion handeln. Ferner weist der Winkelanschlag 1 eine auf das zu bearbeitende Werkstück 4 auflegbare Führungsschiene auf, die zum seitlichen Führen eines Werkzeugs 7 der Elektrohandwerkzeugmaschine 2 beim Bearbeiten des Werkstückes 4 dient. Bei dem Werkstück 4 handelt es sich im dargestellten Ausführungsbeispiel um ein Nut-Federbrett aus Holz für den Innenausbau. Die seitliche Führung der Elektrohandwerkzeugmaschine gewährleistet einen exakten, geraden Sägeschnitt des hier als Kreissägeblatt ausgeführten Werkzeugs 7.

Um den Sägeschnitt im hier dargestellten Ausführungsbeispiel in einer vorgegebenen Richtung ausführen zu können ist vorgesehen, daß die Führungsschiene 6 mit dem Ausrichtelement 5 winkelverstellbar verbunden ist. Sie definiert damit eine im Winkel zur Längsrichtung verlaufende Querrichtung, die in einem spitzen bis rechten Winkel zur Längsrichtung liegt.

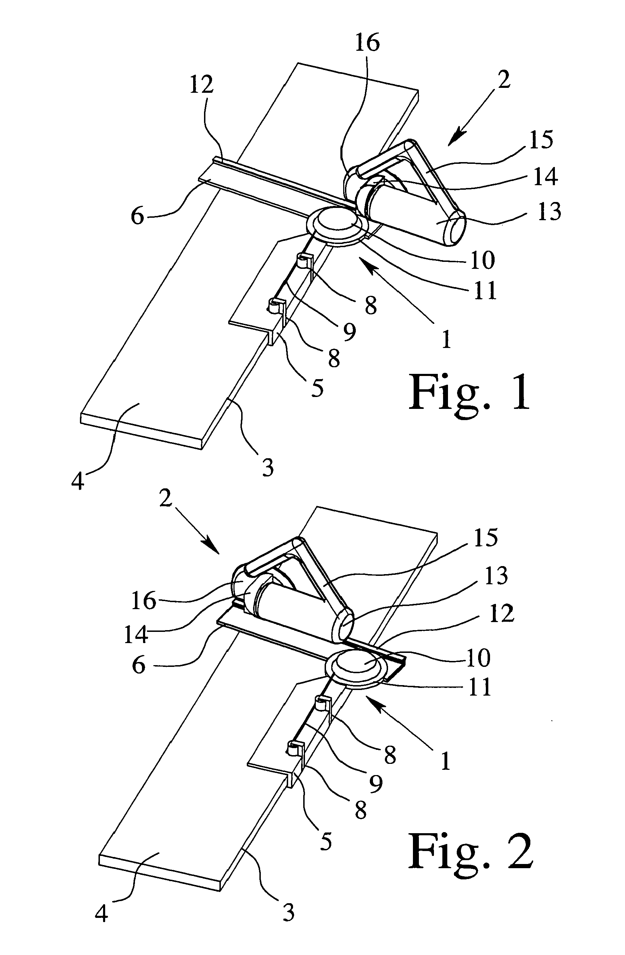

Das dargestellte und bevorzugte Ausführungsbeispiel zeigt in Fig. 1, 2 und 4 nun, daß das Ausrichtelement 5 mindestens ein auf den Rand 3 des Werkstückes 4 seitlich aufschiebbares, an das Werkstück 4 klemmend anstellbares Klemmelement 8 aufweist, mit dem der Winkelanschlag 1 am Werkstück 4 fixierbar ist. Im dargestellten Ausführungsbeispiel sieht man zwei voneinander in Längsrichtung beabstandete Klemmelemente 8, die gleichartig ausgeführt sind. Grundsätzlich wäre es auch möglich, Klemmelemente 8 unterschiedlicher Bauart vorzusehen. Bevorzugt sind aber gleichartige Klemmelemente 8, also Klemmelemente 8, die nach einem übereinstimmenden Funktionsprinzip arbeiten.

Grundsätzlich wäre es möglich, das Klemmelement 8 als mechanisches Schnellspannelement auszuführen. Insbesondere ein Exzenterklemmhebel erlaubt ein schnelles Spannen. Exzenterklemmhebel sind aus dem Stand der Technik bei Werkzeugmaschinen seit langem bekannt. Auch ein Handknebel mit großer Gewindesteigung kann gut als Schnellspannelement verwendet werden.

Das dargestellte und insoweit bevorzugte Ausführungsbeispiel zeigt jedoch, daß die beiden hier vorgesehenen Klemmelemente 8 elektromechanisch, nach Art eines Solenoids, ausgeführt sind. Das dargestellte und insoweit bevorzugte Ausführungsbeispiel ist dabei so konstruiert, daß die Klemmkraft des jeweiligen Klemmelementes 8 durch ein eingebautes Federelement erzeugt wird, wobei dieses Federelement zum Ansetzen des Ausrichtelementes 5, hier also der Ausrichtschiene, an den Rand 3 des Werkstückes 4, elektromechanisch gelüftet wird. In dem befestigten Zustand am Werkstück 4 wie auch im Ruhezustand abgenommen vom Werkstück 4 müssen die Klemmelemente 8 nicht bestromt sein.

Eine Variante der elektromechanischen Klemmung wäre eine elektrohydraulische Klemmung.

Das dargestellte und bevorzugte Ausführungsbeispiel zeigt in Fig. 1 und 2, daß die beiden Klemmelemente 8 über einen Elektroanschluß 9 zur Führungsschiene 6 hin verbunden sind.

Zur winkelverstellbaren Verbindung der Führungsschiene 6 mit dem Ausrichtelement 5 ist hier ein Schwenklagerelement 10 vorgesehen. Das dargestellte Ausführungsbeispiel zeigt eine leicht schräge Einstellung der Führungsschiene 6 mittels des Schwenklagerelementes 10. Der Elektroanschluß 9 der Klemmelemente 8 endet am Schwenklagerelement 10. Er ist möglicherweise dann verdeckt bis zum Elektroanschluß der Elektrohandwerkzeugmaschine 2 geführt, der hier auch nicht weiter dargestellt ist.

Das Schwenklagerelement 10 kann durch manuelle Handhabung so fixiert werden, daß ein einmal eingestellter Winkel erhalten bleibt. Das dargestellte und bevorzugte Ausführungsbeispiel zeigt eine andere Möglichkeit, die dadurch gekennzeichnet ist, daß das Schwenklagerelement 10 eine Rastfixierung aufweist, vorzugsweise eine Rastfixierung, die mit höherem Kraftaufwand manuell überwindbar ist.

Im übrigen hat das Schwenklagerelement 10, am Rand angedeutet, eine Schwenkwinkelanzeige 11, auf der der eingestellte Schwenkwinkel bzw. der Gehrungswinkel des ausgeführten Sägeschnittes ablesbar ist.

Das in Fig. 1 und 2 dargestellte und insoweit bevorzugte Ausführungsbeispiel zeigt im übrigen, daß die Elektrohandwerkzeugmaschine 2 nicht einfach mit einer Grundplatte seitlich an der Führungsschiene 6 angelegt und dann gewissermaßen "freihändig" verschoben wird. Hier ist vielmehr eine definierte Fixierung vorgesehen, nämlich dadurch, daß die Führungsschiene 6 mindestens eine Verschiebeführung 12 zur verschiebbaren Anbringung der Elektrohandwerkzeugmaschine 2 aufweist. Man erkennt in Fig. 1 und 2 wie die Elektrohandwerkzeugmaschine 2 von rechts bei Beginn des Sägeschnittes nach links bis zum Ende des Sägeschnittes an der Verschiebeführung 12 geführt wird.

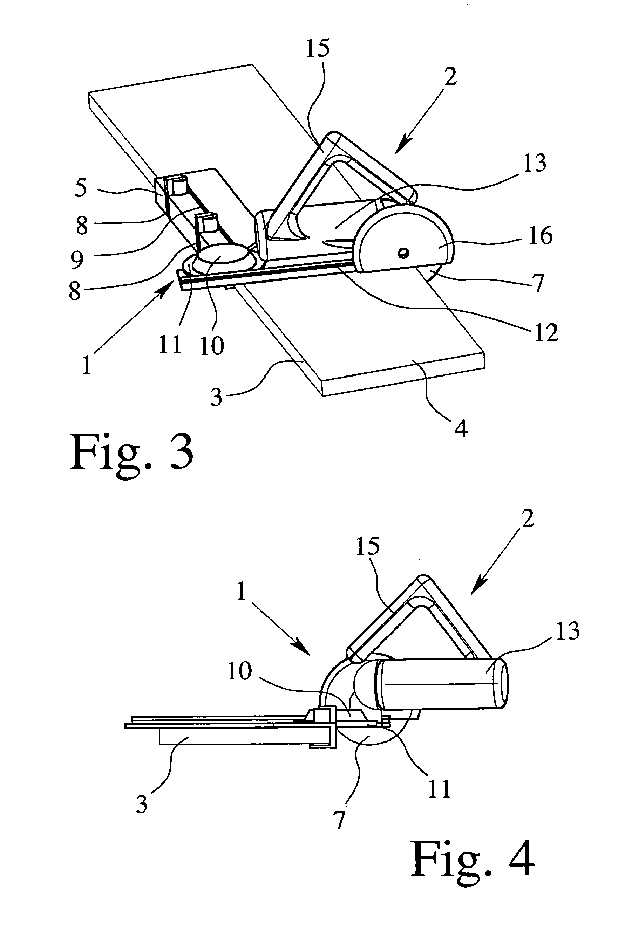

Gegenstand der Erfindung ist auch eine Elektrohandwerkzeugmaschine insgesamt. Diese hat, wie Fig. 1 und 2 erkennen lassen, ein Gehäuse 13, einen vorzugsweise im Gehäuse 13 angeordneten, in Fig. 1 und 2 nur angedeuteten Antriebsmotor, im dargestellten und bevorzugten Ausführungsbeispiel ein Winkelgetriebe 14, einen Handgriff 15 am Gehäuse 13 sowie schließlich ein vom Antriebsmotor, hier unter Zwischenschaltung des Winkelgetriebes 14 angetriebenes Werkzeug 7, das im dargestellten und insoweit bevorzugten Ausführungsbeispiel unter einer Schutzhaube 16 angeordnet ist. In Fig. 3 und 4 erkennt man das Werkzeug 7, das hier gemäß der bevorzugten Ausführung als Handkreissäge ein Kreissägeblatt ist.

Bei einer Stichsäge als Elektrohandwerkzeugmaschine 2 kann die Schutzhaube 16 entfallen, da das Stichsägeblatt durch das Gehäuse der Elektrohandwerkzeugmaschine selbst nach oben hin abgedeckt ist.

Wesentlich ist, daß die Elektrohandwerkzeugmaschine 2 mit der Führungsschiene 6 des Winkelanschlags 1, der zuvor angesprochen worden ist, verschiebbar verbunden ist. Dies kann in lösbarer Form realisiert sein, so daß man die Elektrohandwerkzeugmaschine 2 vom Winkelanschlag 1 abnehmen und beide Teile getrennt transportieren kann. Es kann aber auch eine dauerhafte Verbindung sein. Letzteres könnte sich bei Realisierung elektromechanischer oder elektrohydraulischer Klemmelemente 8 empfehlen, um die elektrische Verbindung am Winkelanschlag 1 dauerhaft herstellen zu können.

Eine lösbare Verbindung hat einen Vorteil hinsichtlich der universellen Nutzbarkeit der Elektrohandwerkzeugmaschine 2, die ja nicht nur in Verbindung mit dem Winkelanschlag 1 genutzt werden soll.

Aus Sicherheitsgründen kann man vorsehen, daß die Elektrohandwerkzeugmaschine 2 an der Führungsschiene 6, insbesondere an deren Verschiebeführung 12, mittels einer Feststellbremse fixiert und nur nach Lösen der Feststellbremse verschiebbar ist.

Besonders anwenderfreundlich ist eine Ausgestaltung, bei der die Elektrohandwerkzeugmaschine 2 einen Laserpointer aufweist, der die Lage des Bearbeitungsweges auf dem Werkstück 4 anzeigt.

Fig. 3 zeigt die Elektrohandwerkzeugmaschine 2 aus Fig. 2 von der gegenüberliegenden Seite aus.

Fig. 4 zeigt die Elektrohandwerkzeugmaschine 2 aus Fig. 1 ohne das Werkstück 4 in einer Stirnansicht, so daß man die randseitige Umfassung des Werkstückes 4 besser erkennen kann.

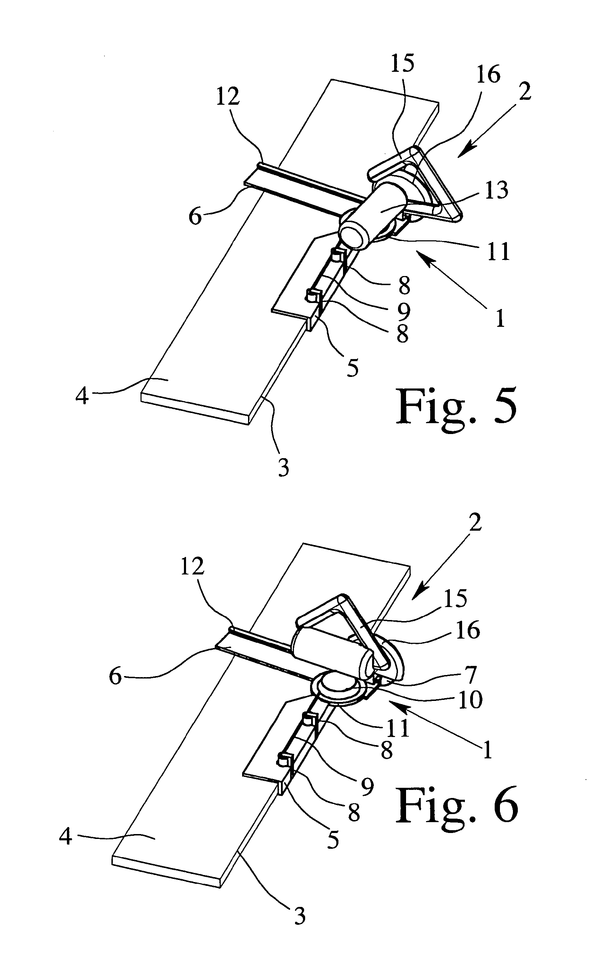

Fig. 5 zeigt ein weiteres Ausführungsbeispiel der Erfindung mit einer etwas anderen Elektrohandwerkzeugmaschine 2. Insbesondere ist das Gehäuse 13 anders angeordnet als beim Ausführungsbeispiel von Fig. 1.

Fig. 6 zeigt wiederum ein modifiziertes Ausführungsbeispiel einer Elektrohandwerkzeugmaschine 2. Hier sitzt der Antriebsmotor im Gehäuse 13 unmittelbar unter dem Handgriff 15.

## Patentansprüche

1. Winkelanschlag für eine zwangsgeführte Elektrohandwerkzeugmaschine (2)
mit einem am Rand (3) eines zu bearbeitenden Werkstückes (4) anlegbaren, eine Längsrichtung definierenden Ausrichtelement (5), insbesondere in Form einer Ausrichtschiene, und
mit einer auf das zu bearbeitende Werkstück (4) auflegbaren Führungsschiene (6) zum seitlichen Führen eines Werkzeugs (7) der Elektrohandwerkzeugmaschine (2) beim Bearbeiten des Werkstückes (4),
wobei die Führungsschiene (6) mit dem Ausrichtelement (5) winkelverstellbar verbunden ist und eine im Winkel zur Längsrichtung verlaufende Querrichtung definiert,
**dadurch gekennzeichnet,**
**daß** das Ausrichtelement (5) mindestens ein auf den Rand des Werkstückes (4) seitlich aufschiebbares, an das Werkstück (4) klemmend anstellbares Klemmelement (8) aufweist, mit dem der Winkelanschlag (1) am Werkstück (4) fixierbar ist.

2. Winkelanschlag nach Anspruch 1, **dadurch gekennzeichnet,**
**daß** das Klemmelement (8) als mechanisches Schnellspannelement, vorzugsweise mit einem Exzenterklemmhebel, ausgeführt ist.

3. Winkelanschlag nach Anspruch 1, **dadurch gekennzeichnet,**
**daß** das Klemmelement (8) elektromechanisch ausgeführt ist.

4. Winkelanschlag nach Anspruch 1, **dadurch gekennzeichnet,**
**daß** das Klemmelement (8) elektrohydraulisch ausgeführt ist.

5. Winkelanschlag nach Anspruch 3 oder 4, **dadurch gekennzeichnet,**
**daß** das Klemmelement (8) einen Elektroanschluß (9) zur Führungsschiene (6) hin aufweist.

6. Winkelanschlag nach einem der Ansprüche 1 bis 5, **dadurch gekennzeichnet, daß** mehrere, vorzugsweise zwei, in Längsrichtung beabstandete, vorzugsweise gleichartige Klemmelemente (8) vorgesehen sind.

7. Winkelanschlag nach einem der Ansprüche 1 bis 6, **dadurch gekennzeichnet, daß** die Führungsschiene (6) mit dem Ausrichtelement (5) über ein Schwenklagerelement (10) winkelverstellbar verbunden ist und, vorzugsweise, in einem eingestellten Winkel fixierbar ist.

8. Winkelanschlag nach Anspruch 7, **dadurch gekennzeichnet,**
**daß** das Schwenklagerelement (10) eine Rastfixierung aufweist, vorzugsweise eine Rastfixierung, die mit höherem Kraftaufwand manuell überwindbar ist.

9. Winkelanschlag nach Anspruch 7 oder 8, **dadurch gekennzeichnet,**
**daß** das Schwenklagerelement (10) eine Schwenkwinkelanzeige (11) aufweist.

10. Winkelanschlag nach einem der Ansprüche 1 bis 9, **dadurch gekennzeichnet, daß** die Führungsschiene (6) mindestens eine Verschiebeführung (12) zur verschiebbaren Anbringung der Elektrohandwerkzeugmaschine (2) aufweist.

11. Elektrohandwerkzeugmaschine mit einem Gehäuse (13) einem vorzugsweise im Gehäuse (13) angeordneten Antriebsmotor, einem Handgriff (15) am Gehäuse (13) und einem vom Antriebsmotor angetriebenen Werkzeug (7), das vorzugsweise unter einer Schutzhaube (16) angeordnet ist,
**dadurch gekennzeichnet,**
**daß** die Elektrohandwerkzeugmaschine (2) mit der Führungsschiene (6) eines Winkelanschlags (1) nach einem der Ansprüche 1 bis 9 verschiebbar verbindbar oder verbunden ist.

12. Elektrohandwerkzeugmaschine nach Anspruch 11, **dadurch gekennzeichnet,**
**daß** die Elektrohandwerkzeugmaschine (2) an der Führungsschiene (6), insbesondere an deren Verschiebeführung (12), mittels einer Feststellbremse fixiert und nur nach Lösen der Feststellbremse verschiebbar ist.

13. Elektrohandwerkzeugmaschine nach Anspruch 11 oder 12, **dadurch gekennzeichnet,**
**daß** die Elektrohandwerkzeugmaschine (2) einen Laserpointer aufweist, der die Lage des Bearbeitungsweges auf dem Werkstück (4) anzeigt.

14. Elektrohandwerkzeugmaschine nach einem der Ansprüche 11 bis 13, **dadurch gekennzeichnet,**
**daß** die Elektrohandwerkzeugmaschine (2) eine Kreissäge mit einem Kreissägeblatt als Werkzeug (7) ist.

15. Elektrohandwerkzeugmaschine nach einem der Ansprüche 11 bis 13, **dadurch gekennzeichnet,**
**daß** die Elektrohandwerkzeugmaschine (2) eine Stichsäge mit einem Stichsägeblatt als Werkzeug (7) ist.
